(19) Europäisches Patentamt
European Patent Office
Office européen des brevets

(11) **EP 2 636 292 B1**

(12) **EUROPÄISCHE PATENTSCHRIFT**

(45) Veröffentlichungstag und Bekanntmachung des Hinweises auf die Patenterteilung:
**23.10.2019 Patentblatt 2019/43**

(51) Int Cl.:
***A01B 79/00*** *(2006.01)*

(21) Anmeldenummer: **13157533.4**

(22) Anmeldetag: **04.03.2013**

(54) **Anordnung und Verfahren zur Präzisionsaussaat von Saatkörnern**

Assembly and method for the precision sowing of seed grains

Agencement et procédé destiné à l'ensemencement de graines

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.03.2012 DE 102012203761**

(43) Veröffentlichungstag der Anmeldung:
**11.09.2013 Patentblatt 2013/37**

(73) Patentinhaber: **Deere & Company**
**Moline, IL 61265 (US)**

(72) Erfinder:
• **Vollmar, Uwe**
**66482 Zweibrücken (DE)**
• **Kormann, Georg, Dr.**
**66482 Zweibrücken (DE)**
• **Wolff, Kilian**
**66440 Blieskastel (DE)**

(74) Vertreter: **Holst, Sönke**
**John Deere GmbH & Co. KG**
**Global Intellectual Property Services**
**John-Deere-Strasse 70**
**68163 Mannheim (DE)**

(56) Entgegenhaltungen:
EP-A1- 1 415 523 EP-A1- 2 227 932
EP-A1- 2 420 122 US-B1- 6 386 128
US-B2- 6 941 225

**Beschreibung**

Die Erfindung betrifft eine Anordnung zur Präzisionsaussaat von Saatkörnern, sowie ein entsprechendes Verfahren.

Stand der Technik

In der Landwirtschaft werden in größeren Abständen voneinander angebaute Pflanzen, wie Mais oder Rüben, üblicherweise durch Einzelkornsämaschinen gesät. Dabei bewegt ein Ackerschlepper mehrere an einem Werkzeugträger seitlich nebeneinander angebrachte Reiheneinheiten über ein Feld und die Ansteuerung der Reiheneinheiten erfolgt derart, dass das Saatgut in möglichst regelmäßigen Abständen ausgebracht wird. Da die Reiheneinheiten nicht bei einer einzigen Überfahrt das ganze Feld abdecken können, muss der Ackerschlepper nach dem Säen eines ersten Streifens am Feldende wenden und das Feld in Gegenrichtung überfahren und das Saatgut auf einem zweiten Streifen des Feldes ausbringen. In der Vergangenheit erfolgte keine Ausrichtung der Position des Saatguts zueinander auf den beiden Streifen, sodass es auf den beiden Streifen mehr oder weniger weit in der Fahrtrichtung gegeneinander versetzt ausgebracht wird. In diesem Fall besteht jedoch keine Möglichkeit mehr, das Feld bei Pflegemaßnahmen (Düngen, Schädlingsbekämpfung) quer zur ursprünglichen Fahrtrichtung des Ackerschleppers beim Säen zu befahren.

Die EP 1 415 523 A1 schlägt demgegenüber vor, die einzelnen Reiheneinheiten einer Sämaschine mit einem zugeordneten Antrieb auszustatten und diese Antriebe zentral unter Verwendung eines externen Positionsbestimmungssystems anzusteuern, um ein vorgegebenes Säbild zu erzielen. Bei einer anderen Ausführungsform wird der Abwurfpunkt der einzelnen Saatkörner mittels eines Saatgutsensors zur Erkennung der Winkelstellung einer Säscheibe einer anderen Reiheneinheit erfasst. Auf Grund dieser Maßnahmen kann zwar ein zweidimensionales Säbild realisiert werden, jedoch ist die Erfassung der tatsächlichen Position des Saatkorns nicht immer hinreichend genau, denn die Zeit zwischen der Abgabe des Saatkorns durch die Säscheibe und dem Erreichen der endgültigen Position des Saatkorns im Boden kann beispielsweise bei unterschiedlich großen Saatkörnern unterschiedlich sein und der räumliche Versatz zwischen der Abgabe des Saatkorns durch die Säscheibe und dem Erreichen der endgültigen Position des Saatkorns im Boden hängt von der Fahrgeschwindigkeit des Ackerschleppers ab, die nicht unbedingt konstant ist. Somit sind bei der Anordnung nach EP 1 415 523 A1 immer noch unerwünschte Versatze zwischen benachbarten Pflanzenreihen möglich.

Diese Problematik gilt auch für die Anordnung nach DE 10 2005 010 686 A1, bei welcher die Antriebe der Zellenräder der Reiheneinheiten anhand eines Positionsbestimmungssystems angesteuert werden, um Ablagestellen benachbarter Reihen miteinander fluchten zu lassen und die Antriebe durch Inkrementalgeber untereinander synchronisiert werden.

Weiterhin wird vorgeschlagen, die Position von Saatkörnern in der Furche durch einen Saatgutsensor zu erfassen und die Antriebe der Säeinheiten derart anzusteuern, dass gewünschte relative Abstände der Pflanzen in Fahrtrichtung erzielt werden (EP 2 227 932 A1), oder das Saatgut beim Fall durch die Saatgutröhre optisch zu erfassen und anhand eines Positionsbestimmungssystems und der gemessenen Vorwärtsgeschwindigkeit der Sämaschine die Ablageposition zu bestimmen und in eine Karte einzutragen (US 6 941 225).

Die US 6 386 128 B1 beschreibt eine Sämaschine, bei der das Saatkorn auf seinem Weg in die Furche oder in der Furche optisch erfasst wird. Zudem wird die Position der Säeinrichtung erfasst. Die Positionen der Saatgutabgabe werden mit der Geschwindigkeit der Sämaschine korreliert, um es dem Bediener zu ermöglichen, die Geschwindigkeit des Traktors zu verändern, falls der Abstand zwischen benachbarten Saatkörnern nicht akzeptabel ist. In ähnlicher Weise schlägt die EP 2 420 122 A1 vor, in der Furche abgelegtes Saatkorn durch einen Sensor zu erfassen. Anhand der Geschwindigkeit der Sämaschine wird der Abstand benachbarter Saatkörner bestimmt. Dieser Abstand wird dem Bediener angezeigt, um ggf. korrigierende Maßnahmen durchführen zu können. Die erwähnten Sämaschinen können somit nur erfassen, ob ein gewünschter Abstand zwischen benachbarten Saatkörnern eingehalten wird, korrigierende Gegenmaßnahmen bleiben dem Bediener überlassen oder erfolgen durch eine Anpassung der Fahrgeschwindigkeit der Sämaschine.

Aufgabe der Erfindung

Die Erfindung hat sich zur Aufgabe gesetzt, eine Sämaschine mit wenigstens einer Reiheneinheit dahingehend zu verbessern, dass ein gewünschtes Säbild gegenüber dem Stand der Technik mit höherer Genauigkeit eingehalten werden kann.

Lösung

Diese Aufgabe wird erfindungsgemäß durch die Lehre der Patentansprüche 1 und 9 gelöst, wobei in den weiteren Patentansprüchen Merkmale aufgeführt sind, die die Lösung in vorteilhafter Weise weiterentwickeln.

Eine Anordnung zur Präzisionsaussaat von Saatkörnern umfasst eine Sämaschine mit wenigstens einer Reiheneinheit, der ein zur Veranlassung einer Abgabe eines Saatkorns in eine Furche eingerichteter Antrieb zugeordnet ist und eine Steuerung, die mit einem Positionsbestimmungssystem, einer Speichereinrichtung zur Abspeicherung von gewünschten Ablagepositionen von Saatgutkörnern, dem Antrieb der Reiheneinheit und einem Saatgutsensor zur Erfassung der tatsächlichen Ablageposition der Saatgutkörner in der Furche verbunden ist. Die Steuerung steuert den Antrieb basierend auf Signalen des Positionsbestimmungssystems, der Speichereinrichtung und des Saatgutsensors derart an, dass die Saatgutkörner sukzessive an den Ablagepositionen abgelegt werden.

Auf diese Weise verlässt sich die Steuerung nicht, wie im Stand der Technik nach EP 1 415 523 A1 und DE 10 2005 010 686 A1 darauf, dass der zeitliche und räumliche Versatz zwischen der Abgabe des Saatkorns durch die Säscheibe bzw. die Zellenräder und ihrer endgültigen Position in der Furche konstant ist, sondern erfasst die tatsächliche Position des Saatguts in der Furche. Dadurch werden bisher unberücksichtigte Fehlerquellen, wie die Vortriebsgeschwindigkeit der Sämaschine, saatkorngrößenbedingte unterschiedliche Fallgeschwindigkeiten des Saatguts in der Saatröhre und eine mögliche Neigung des Bodens in Vorwärtsrichtung berücksichtigt, wodurch das Einhalten der gewünschte Ablageposition mit gegenüber dem Stand der Technik höherer Präzision erzielt wird.

In der Regel umfasst die Sämaschine eine Anzahl seitlich nebeneinander angeordneter Reiheneinheiten, denen ein gemeinsamer Antrieb oder jeweils ein separater Antrieb zugeordnet ist. Der Antrieb oder die Antriebe werden durch eine gemeinsame (oder eine der Reiheneinheit zugeordnete) Steuerung angesteuert. Die Reiheneinheiten können in einer Reihe oder in Vorwärtsrichtung zueinander versetzt angebracht sein. Es kann jeder Reiheneinheit ein Saatgutsensor zugeordnet werden oder nur ein Teil der Reiheneinheiten oder nur eine einzige Reiheneinheit mit einem Saatgutsensor ausgestattet werden.

Als Saatgutsensor wird insbesondere eine Kamera verwendet, obwohl auch Laserscanner oder eindimensionale Zeilensensoren zur Erfassung des Saatkorns oder eine Lichtschranke oder ein Thermosensor zur Erfassung aufgeheizten Saatguts verwendet werden könnten.

Bei einer bevorzugten Ausführungsform der Erfindung ist die Steuerung mit Mitteln zur Erfassung der Bodenneigung in Vorwärtsrichtung verbunden und betreibbar, den Einfluss der Bodenneigung in Vorwärtsrichtung auf die Position der Saatgutkörner vorausschauend zu berücksichtigen. Wenn das Saatgut demnach beim Hangauffahren nach unten rollt, lernt die Steuerung diesen Zusammenhang anhand der Signale des Saatgutsensors und der Mittel zur Erfassung der Bodenneigung und sie verschiebt beim nachfolgenden Hangabfahren die Saatgutabgabe selbsttätig zeitlich nach vorn, um nicht erst durch den Saatgutsensor zu lernen, dass ein oder mehrere Saatgutkörner zu weit vorn in der Furche abgelegt wurden. Bei den Mitteln zur Erfassung der Bodenneigung kann es sich um einen Bodenneigungssensor handeln. Es wäre auch denkbar, den Erfahrungswert (für die sensierte Position des Saatguts und/oder eine daraus oder aus erfassten dreidimensionalen Positionsdaten abgeleitete Bodenneigung) aus der vorhergehenden Fahrspur zu verwenden, um einen Initialwert für die ersten Saatkörner der neuen Reihe zu bilden.

Durch die Steuerung wird ein zeitlicher Versatz Δt zwischen der Aktivierung des Antriebs und dem Erreichen der endgültigen Position des Saatkorns in der Furche anhand der Signale des Saatgutsensors evaluiert und dieser zeitliche Versatz Δt gemeinsam mit der aktuellen Vortriebsgeschwindigkeit v bei der Ansteuerung des Antriebs berücksichtigt. Der zeitliche Versatz Δt kann anhand der durch den Saatgutsensor erkannten Position des Saatkorns in der Furche (unter Berücksichtigung der aktuellen Vortriebsgeschwindigkeit v und der Geometrie des Saatgutsensors und der Reiheneinheit) und/oder anhand der Zeitpunkte der Aktivierung des Antriebs und des Nachweises des Saatkorns in der Furche bestimmt werden.

Es ist auch möglich, dass die Steuerung die mit dem Saatgutsensor und dem Positionsbestimmungssystem erfassten Ablagepositionen der Saatkörner in der Furche bei einer ersten Überfahrt des Feldes in der Speichereinrichtung abspeichert. Der Steuerung liegt somit eine Information darüber vor, an welchen Positionen die Saatkörner tatsächlich abgelegt wurden. Diese Information wird bei einer Anschlussfahrt, d.h. bei einer nachfolgenden, an den bereits gesäten Bereich des Feldes anschließenden Überfahrt über das Feld dazu verwendet, den Antrieb anzusteuern, um zu erreichen, dass die Saatkörner bei dieser Anschlussfahrt an der gewünschten Position relativ zu den bei der ersten Überfahrt abgelegten Positionen abgelegt werden.

Das kann im Einzelnen anhand des oben beschriebenen zeitlichen Versatzes Δt und der Vortriebsgeschwindigkeit erfolgen oder es wird ein räumlicher Versatz Δx zwischen der Position, an der sich die Sämaschine bei der Aktivierung des Antriebs befindet, und der tatsächlichen Position evaluiert, an der das Saatkorn in der Furche abgelegt wird. Dieser Versatz kann bei der ersten Überfahrt erzeugt werden und bei der Anschlussfahrt wird der Antrieb um den Versatz Δx weiter vorn oder hinten aktiviert, wobei es sinnvoll ist, die Vortriebsgeschwindigkeit konstant zu halten. Alternativ dazu wird der Versatz Δx erst bei der Anschlussfahrt anhand der Signale des Saatgutsensors kontinuierlich bestimmt und bei der Ansteuerung des Antriebs berücksichtigt.

Ausführungsbeispiele

In den Zeichnungen ist ein nachfolgend näher beschriebenes Ausführungsbeispiel der Erfindung dargestellt. Es zeigt:

Fig. 1      eine Draufsicht auf einen Ackerschlepper mit einer daran angebrachten Sämaschine,

Fig. 2      eine seitliche Ansicht einer Reiheneinheit der Sämaschine,

Fig. 3      ein Schema einer Steuerung zur Kontrolle der Reiheneinheiten,

Fig. 4 ein Flussdiagramm für eine erste Vorgehensweise, nach dem die Steuerung arbeiten kann,

Fig. 5 ein weiteres, mögliches Muster eines Saatbildes, und

Fig. 6 ein Flussdiagramm für eine zweite Vorgehensweise, nach dem die Steuerung arbeiten kann.

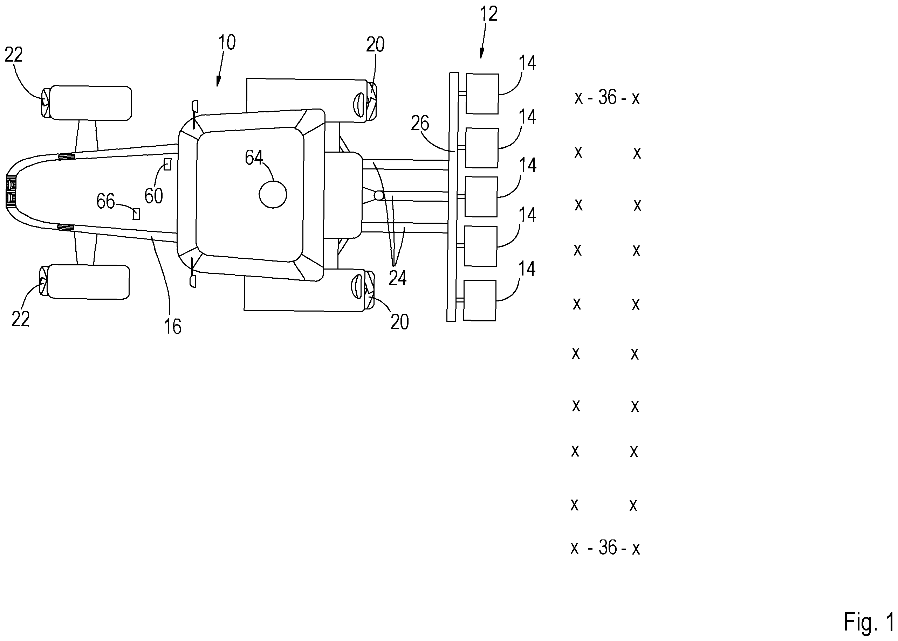

Die Figur 1 zeigt eine Draufsicht auf eine Kombination aus einem Ackerschlepper 10 und einer daran befestigten Sämaschine 12 mit einer Anzahl über die Breite des Geräts 12 verteilter Reiheneinheiten 14 zum Einbringen von Saatgut in den Boden, obwohl auch beliebige andere Typen von Sämaschinen 12 verwendet werden können. Die Reiheneinheiten 14 können auf einer Linie liegen, wie gezeigt, oder in Vorwärtsrichtung zueinander versetzt befestigt sein. Der Ackerschlepper 10 umfasst ein Fahrgestell 16 mit hinteren, antreibbaren Rädern 20 und vorderen, lenkbaren Rädern 22. An einer am Fahrgestell 16 befestigten Dreipunktanbauvorrichtung 24 mit Ober- und Unterlenkern ist ein sich horizontal und quer zur Vorwärtsrichtung des Ackerschleppers 10, die in der Figur 1 von rechts nach links verläuft, erstreckender Werkzeugträger 26 angebracht. Der Werkzeugträger 26 haltert die Reiheneinheiten 14 der Sämaschine 12. Die Sämaschine 12 könnte auch auf eine beliebige andere Art am Fahrzeug 12 befestigt sein, beispielsweise auf einem Fahrgestell ruhen und über eine Deichsel gezogen werden. Auch könnte die Sämaschine 12 als pneumatische Sämaschine ausgeführt sein.

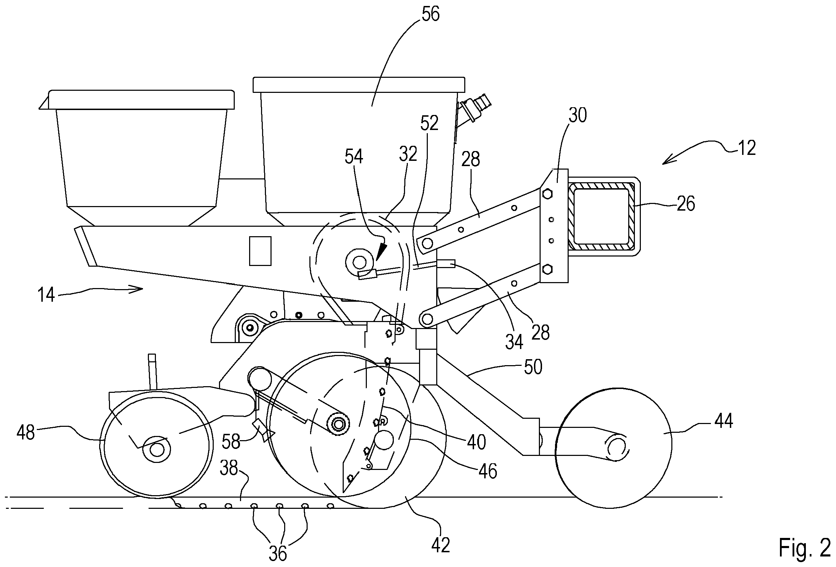

Die Figur 2 zeigt eine seitliche Ansicht einer einzigen der untereinander identischen Reiheneinheiten 14 der Sämaschine 12. Die Reiheneinheit 12 ist durch schwenkbare Parallelogramm-Lenker 28 mit einer am Werkzeugträger 26 befestigten Halterung 30 verbunden. Dadurch ist die Reiheneinheit 12 in vertikaler Richtung beweglich, um der Kontur des Bodens zu folgen. Ein Dosiersystem 32 ist durch einen ihm zugeordneten elektromotorischen Antrieb 34 antreibbar, um Saatkörner 36 durch ein Saatgutrohr 40 mit einem vorbestimmten Abstand an vorbestimmten Positionen in einer Furche 38 abzulegen. Die Furche 38 wird durch einen zweischeibigen Furchenöffner 42 geformt. Ein dem Furchenöffner 42 vorgelagertes Scheibensech 44 hilft dabei, Verunreinigungen und Pflanzenreste der vorherigen Pflanzsaison durchzuschneiden. Tiefeneinstellräder 46, die auf beiden Seiten und geringfügig nach hinten versetzt neben den Furchenöffnern 42 angeordnet sind, legen die Tiefe fest, mit welcher die Furchenöffner 42 in den Boden eindringen, und somit die Tiefe der Furche 38. Rückwärtig der Tiefeneinstellräder 46 befinden sich Schließräder 48, die Boden auf die Furche 38 legen und diese somit schließen. Das Scheibensech 44, die Tiefeneinstellräder 46 und die Schließräder 48 sind um mittige, sich horizontal und quer zur Vorwärtsrichtung erstreckende Achsen drehbar am Rahmengestell 50 der Reiheneinheit 14 angebracht.

Der Antrieb 34 ist über eine Welle 52 und ein Schneckengetriebe 54 mit dem Dosiersystem 32 verbunden, das sukzessive Saatkörner 36 aus einem Behälter 56 entnimmt und durch das Saatrohr 40 in die Furche 38 ablegt. Das Dosiersystem 32 kann beliebigen Aufbaus sein, z.B. mit einem Zellenrad oder einer Säscheibe mit Bürsten oder Aussparungen zur Aufnahme von Saatkörnern 36. Ein Saatgutsensor 58 in Form einer Kamera beobachtet die Saatkörner 36 in der Furche 38. Es wäre auch denkbar, nur einen gemeinsamen Antrieb (nicht gezeigt) für alle Dosiersysteme 32 vorzusehen, der diese über eine am Werkzeugträger 26 angeordnete Querwelle antreibt (vgl. EP 2 322 026 A1).

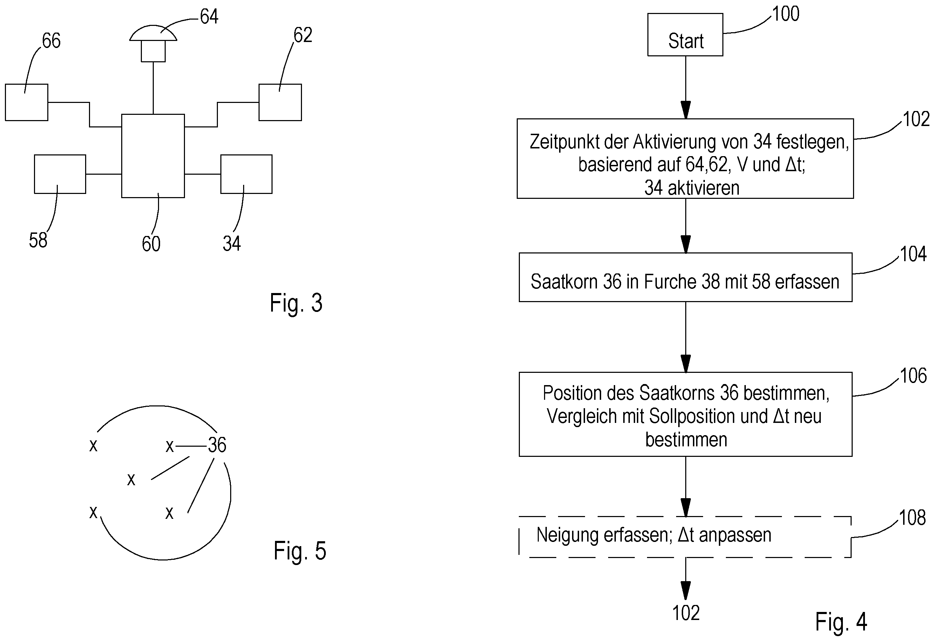

Wie in der Figur 3 dargestellt, ist eine Steuerung 60 mit dem Saatgutsensor 58, dem Antrieb 34 und einem Positionsbestimmungssystem 64 verbunden, das einen Empfänger zum Empfang von Signalen eines satellitenbasierten Systems, wie GPS (Global Positioning System), Galileo oder Glonass und vorzugsweise einen weiteren Empfänger zum Empfang von über Radiowellen übertragenen Korrektursignalen aufweist, um die Position des Ackerschleppers 10 möglichst präzise bestimmen zu können. Das Positionsbestimmungssystem 64 dient in der Regel auch zur selbsttätigen Lenkung des Ackerschleppers 10. Schließlich ist die Steuerung 60 auch mit einer Speichereinheit 62 verbunden. Das Positionsbestimmungssystem 64 und/oder die Steuerung 60 könnten sich, anders als gezeigt, auch an Bord der Sämaschine 12 befinden. Anders als in der Figur 3 dargestellt, ist die Steuerung 60 mit Antrieben 34 aller Reiheneinheiten 14 und Saatgutsensoren 58 aller Reiheneinheiten 14 verbunden.

Die Steuerung 60 arbeitet im Betrieb nach dem Flussdiagramm der Figur 4. Nach dem Start im Schritt 100 wird im Schritt 102 der jeweils nächste Zeitpunkt t bestimmt, an dem der Antrieb 34 aktiviert werden soll, um ein weiteres Saatkorn 36 in der Furche 38 abzulegen. Dabei wird zunächst bestimmt, an welcher (zwei- oder dreidimensional erfassten) SollPosition x das nächste Saatkorn 36 abgelegt werden soll, wozu entsprechende Daten aus der Speichereinheit 62 entnommen werden. In der Speichereinheit 62 kann dazu eine Karte abgespeichert sein, in der sämtliche Positionen eines Felds, an denen jeweils ein Saatkorn 36 abgelegt werden soll, abgelegt sind. Diese Karte kann zuvor auf einem Hof-Rechner erzeugt und auf beliebige Weise (z.B. drahtlos oder mittels eines tragbaren Speicherchips) in die Speichereinheit 62 übertragen werden. Es ist auch denkbar, diese Karte erst beim Säbetrieb zu erzeugen, indem die Positionen der jeweils ersten Saatgutablagen der Reiheneinheiten 14 auf dem Feld abgespeichert werden und die folgenden Saatkornablagepositionen online durch die Steuerung 60 festgelegt werden, beispielsweise anhand vorgegebener oder durch einen Bediener eingegebener Abstände in Vorwärtsrichtung und unter Berücksichtigung der festen Abstände der Reiheneinheiten 14 in Querrichtung.

Dabei repräsentiert die Karte ein gewünschtes Säbild, wie beispielsweise das in der Figur 1 gezeigte quadratische Muster, das - obwohl durch Säen in entgegengesetzten Fahrtrichtungen erzeugt - bei nachfolgenden Pflegemaßnahmen sowohl in Vorwärtsrichtung des Ackerschleppers 10 als auch quer dazu befahren werden kann. Es können aber auch beliebige andere Muster erzeugt werden, z.B. wie in der Figur 5 gezeigte Muster, bei dem das Feld unter Winkeln von +/- 45° zu der beim Säen geltenden Vorwärtsrichtung befahren werden kann und alle Pflanzen gleiche Abstände zu den jeweils nächsten Pflanzen haben.

Bei der Bestimmung des Zeitpunkts im Schritt 102 wird außerdem bestimmt, an welcher (zwei- oder dreidimensional erfassten) Ist-Position y sich die Reiheneinheit 14 gerade befindet. Dazu werden die Signale des Positionsbestimmungssystems 64 und der bekannte Versatz zwischen dem Positionsbestimmungssystem 64 und der Reiheneinheit 14 in Vorwärtsrichtung berücksichtigt. Weiterhin wird die Vortriebsgeschwindigkeit v des Ackerschleppers 10, die mit dem Positionsbestimmungssystem 64 und/oder durch geeignete Sensoren zur Erfassung der Drehzahl der Räder 20 und/oder 22 oder einem Radarsensor (nicht gezeigt) zur Erfassung der Vortriebsgeschwindigkeit gegenüber dem Erdboden gemessen werden kann, und ein zeitlicher Versatz $\Delta t$ zwischen der Aktivierung des Antriebs 34 und dem Erreichen der endgültigen Position des Saatkorns 36 in der Furche 38 berücksichtigt. Im Einzelnen kann der Zeitpunkt t nach der Formel

$$t = abs(x-y)/v - \Delta t$$

berechnet werden, wobei t die bis zur Aktivierung des Antriebs 34 abzuwartende Zeit und abs(x-y) der Absolutbetrag der Differenzen der absoluten Positionen x und y ist, d.h. der Abstand zwischen der Soll- und Istposition in Vorwärtsrichtung.

Sobald der Zeitpunkt zur Aktivierung des Antriebs 34 gekommen ist, wird der Antrieb 34 durch die Steuerung 60 aktiviert und ein einziges Saatkorn 36 in das Saatrohr 40 und in die Furche 38 abgegeben.

Im Schritt 104 wird das Saatkorn 36 durch den Saatgutsensor 58 in der Furche 38 identifiziert, wozu die Ausgangssignale der Kamera mittels eines Bildverarbeitungssystems analysiert werden.

Im Schritt 106 wird die Position des Saatkorns 36 bestimmt, wozu die Signale des Positionsbestimmungssystems 62 und des Saatgutsensors 58 sowie der bekannte Versatz zwischen dem Positionsbestimmungssystem 62 und dem Saatgutsensor 58 herangezogen werden. Es erfolgt dann ein Vergleich zwischen der tatsächlichen Position des Saatkorns 36 und der im Schritt 102 definierten Sollposition. Falls eine (über einem vorbestimmten Schwellenwert liegende) Abweichung festgestellt wird, beispielsweise weil das Saatkorn 36 schneller oder langsamer war als im Schritt 102 vorausgesetzt, wird $\Delta t$ entsprechend korrigiert. In erster Näherung kann dabei der Abstand $\Delta x$ zwischen Soll- und Istposition des Saatkorns 36 in der Furche 38 durch die Geschwindigkeit v geteilt werden, um den so erhaltenen Korrekturwert zu $\Delta t$ zu addieren oder davon zu subtrahieren, je nachdem, ob das Saatkorn 36 zu weit hinten oder vorn sensiert wurde. Alternativ oder zusätzlich kann $\Delta t$ auch direkt gemessen werden, indem die Zeitpunkte der Abgabe des Saatkorns 36 (bzw. die Aktivierung des Antriebs 34) und der Nachweis des Saatkorns 36 in der Furche 38 durch den Saatgutsensor 58 erfasst werden.

Hier sei noch angemerkt, dass beim ersten Aufruf des Schritts 102 ein abgespeicherter Erfahrungswert für $\Delta t$ verwendet werden kann, solange die Messwerte der Schritte 104 und 106 noch nicht vorliegen.

Im optionalen Schritt 108 kann noch die Neigung des Ackerschleppers 10 (oder der Reiheneinheiten 14) gegenüber der Vorwärtsrichtung erfasst werden. Dazu kann ein Neigungssensor 66 verwendet werden, oder diese Neigung wird anhand zweier nacheinander erfasster dreidimensionaler Positionen des Positionsbestimmungssystems 64 berechnet. Falls sich die Neigung seit dem letzten Durchlaufen des Schritts 108 geändert haben sollte, wird $\Delta t$ angepasst, damit die Auslösung des Antriebs 34 früher (wenn vorher bergauf und nun bergab gefahren wird) oder später (wenn vorher bergab und nun bergauf gefahren wird) erfolgen kann und somit das geänderte Rollverhalten des Saatkorns 36 aufgrund einer anderen Steigung in Vorwärtsrichtung berücksichtigt wird.

Auf den Schritt 108 (oder Schritt 106) folgt dann wieder der Schritt 102.

Während im Vorhergehenden die Kontrolle nur eines einzigen Antriebs 34 beschrieben wurde, und kontrolliert die Steuerung 60 die Antriebe 34 aller Reiheneinheiten 14 nach dem Diagramm der Figur 4 getrennt voneinander und zeitlich nacheinander oder gleichzeitig (multi-tasking), obwohl es auch möglich wäre, für jede Reiheneinheit 14 eine eigene Steuerung 60 bereitzustellen.

Weiterhin sei noch angemerkt, dass bei der Beschreibung der Figur 4 absolute Positionen erwähnt wurden, die in einem beliebigen terrestrischen Referenzsystem gemessen werden können. Es können in den Schritten der Figur 4 jedoch alternativ relative Positionen verwendet werden, die sich beispielsweise auf das Bezugssystem des Ackerschleppers 10 oder der Sämaschine 12 beziehen. Dann wäre lediglich bei Wechsel der Fahrtrichtung des Ackerschleppers 10 eine absolute Referenzierung der vor und nach dem Fahrtrichtungswechsel verwendeten Bezugssysteme zueinander vorzusehen.

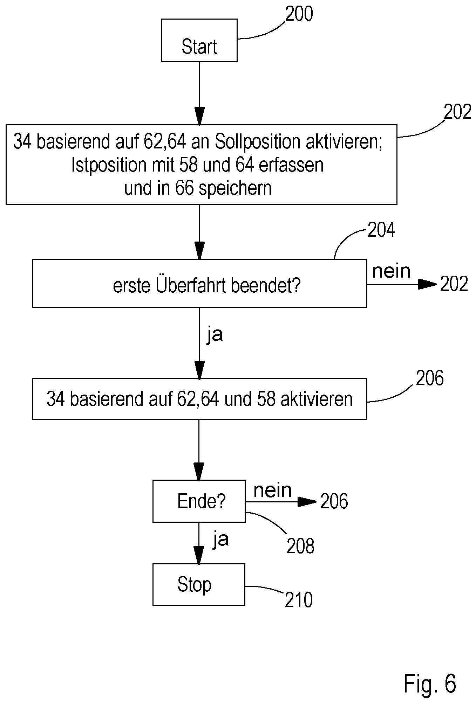

Die Figur 6 zeigt ein Flussdiagramm, nach dem die Steuerung 60 alternativ zu dem Flussdiagramm der Figur 4 vorgehen könnte. Nach dem Start im Schritt 200 wird der Schritt 202 durchgeführt, in dem die Steuerung 60 die Antriebe 34 (oder den einzigen Antrieb 34 für alle Reiheneinheiten 14) basierend auf den Signalen des Positionsbestimmungssystems 64 und Daten aus der Speichereinheit 62, die in der bezüglich des Schritts 102 beschriebenen Weise die Positionen vorgeben, an denen Saatkörner 36 in die Furchen 38 abgegeben werden sollen, derart ansteuert, dass auf dem überfahrenen Bereich des Felds die Saatkörner 36 an den gewünschten Positionen abgelegt werden, um einen ersten Teil des gewünschten Säbilds zu säen. Die tatsächlichen Positionen der Saatkörner 38 in der Furche 38 werden in diesem Schritt 202 anhand der Signale des Saatgutsensors 58 und des Positionsbestimmungssystems 64 (und des bekannten Versatzes zwischen dem Positionsbestimmungssystem 64 und dem Sichtfeld des Saatgutsensors 58) georeferenziert erfasst und in der Speichereinheit 62 abgelegt.

Es folgt der Schritt 204, in dem abgefragt wird, ob die erste Überfahrt des Feldes beendet wurde, was anhand der Signale des Positionsbestimmungssystems 64 erfasst werden kann. Ist das nicht der Fall, folgt wieder der Schritt 202, anderenfalls der Schritt 206.

Im Schritt 206 findet nun eine Anschlussfahrt statt, bei der das Saatgut möglichst genau mit dem bei der ersten Überfahrt (Schritt 202) ausgebrachten Saatgut ausgerichtet werden soll, um das gewünschte Säbild (vgl. die Beispiele in den Figuren 1 und 5) zu erzielen. In diesem Schritt 206 wird dazu der Antrieb 34 (oder die Antriebe 34) zusätzlich basierend auf den Signalen des Saatgutsensors 58 angesteuert. Durch diesen Saatgutsensor 58 kann die tatsächliche Position der im Schritt 206 ausgebrachten Saatkörner 36 in der Furche 38 erfasst und mit der anhand der im Schritt 202 abgespeicherten Istposition bei der ersten Überfahrt ermittelten Sollposition verglichen werden, sodass der Steuerung eine Information über einen Versatz $\Delta x$ zwischen der Istposition und der Sollposition als Regeleingangsgröße vorliegt und dieser Versatz durch entsprechende Ansteuerung des Antriebs 34 möglichst genau auf Null gebracht wird. Diese Ansteuerung kann ortsbasiert, d.h. rein auf dem Versatz $\Delta x$ basierend erfolgen, oder zeitbasiert, wie bezüglich der Schritte 102 bis 106 erläutert.

Dieser Versatz $\Delta x$ könnte alternativ dazu auch schon im Schritt 202 bestimmt werden und im Schritt 206 wird der Antrieb dann um eine dem Versatz $\Delta x$ entsprechende Strecke in Vorwärtsrichtung weiter vorn oder hinten aktiviert, um diesen Versatz auszugleichen. Dabei kann der Versatz $\Delta x$ für das ganze Feld gleich gewählt werden oder von der jeweiligen Position entlang der Fahrspur abhängen. Diese Vorgehensweise eignet sich besonders, wenn die Vortriebsgeschwindigkeit des Ackerschleppers hinreichend konstant ist.

Es folgt auf den Schritt 206 der Schritt 208, in dem abgefragt wird, ob der Sävorgang auf dem Feld beendet ist, wozu ebenfalls auf die Signale des Positionsbestimmungssystems 64 zurückgegriffen werden kann. Ist der Vorgang noch nicht beendet, folgt wieder der Schritt 206, sonst das Ende im Schritt 210.

Nach dem Aussäen der Saatkörner 36 auf dem gesamten Feld liegt in der Speichereinheit 62 der Steuerung 60 eine genaue Karte vor, an welchen Stellen die Saatkörner 36 auf dem Feld abgelegt wurden. Diese Karte kann verwendet werden, einen Wegplan für zukünftige Feldbearbeitungen zu erstellen, der sich aus in Särichtung oder in einer einen Winkel mit der Särichtung einschließenden Richtung (vgl. Figuren 1 und 5) verlaufenden Überfahrten des Feldes zusammensetzt. Die Erstellung des Wegplans kann bereits während der Aussaat oder nachträglich auf einem beliebigen (Hof-) Computer erfolgen, auf den die Karte drahtlos oder mittels eines tragbaren Speichermediums übertragen wird.

## Patentansprüche

1. Anordnung zur Präzisionsaussaat von Saatkörnern, umfassend:

   eine Sämaschine (12) mit wenigstens einer Reiheneinheit (14), der ein zur Veranlassung einer Abgabe eines Saatkorns (36) in eine Furche (38) eingerichteter Antrieb (34) zugeordnet ist, und eine Steuerung (60), die mit einem Positionsbestimmungssystem (64), einer Speichereinrichtung (62) zur zwei- oder dreidimensionalen Abspeicherung gewünschter Ablagepositionen von Saatgutkörnern (36), dem Antrieb (34) der Reiheneinheit (14) und einem Saatgutsensor (58) zur Erfassung der tatsächlichen Ablageposition der Saatgutkörner (36) in der Furche (38) verbunden und eingerichtet ist, den Antrieb (34) basierend auf Signalen des Positionsbestimmungssystems (64), den in der Speichereinrichtung (62) eingetragenen, gewünschten Ablagepositionen und Signalen des Saatgutsensors (58) derart anzusteuern, dass die Saatgutkörner (36) sukzessive an den gewünschten Ablagepositionen abgelegt werden, wobei die Steuerung (60) eingerichtet ist, anhand der Signale des Saatgutsensors (58) einen zeitlichen Versatz ($\Delta t$) zwischen der Aktivierung des Antriebs (34) und dem Erreichen der endgültigen Position des Saatkorns (36) in der Furche (38) zu evaluieren und gemeinsam mit der aktuellen Vortriebsgeschwindigkeit (v) bei der Ansteuerung des Antriebs (34) zu berücksichtigen.

2. Anordnung nach Anspruch 1, wobei die Sämaschine (12) eine Anzahl seitlich nebeneinander in einer Reihe oder in Vorwärtsrichtung zueinander versetzt angeordneter Reiheneinheiten (14) umfasst, denen jeweils ein separat durch die Steuerung (60) ansteuerbarer Antrieb (34) oder denen ein gemeinsamer, durch die Steuerung (60) ansteuerbarer Antrieb zugeordnet ist.

3. Anordnung nach Anspruch 2, wobei jeder der Reiheneinheiten (14) ein Saatgutsensor (58) zugeordnet ist oder nur ein Teil der Reiheneinheiten (14) oder nur eine einzige Reiheneinheit (14) mit einem Saatgutsensor (58) ausgestattet ist.

4. Anordnung nach einem der Ansprüche 1 bis 3, wobei der Saatgutsensor (58) eine Kamera und/oder einen Laserscanner und/oder einen eindimensionalen Zeilensensor zur Erfassung des Saatkorns und/oder eine Lichtschranke und/oder einen Thermosensor zur Erfassung aufgeheizten Saatguts umfasst.

5. Anordnung nach einem der vorhergehenden Ansprüche, wobei die Steuerung (60) mit Mitteln zur Erfassung der Bodenneigung in Vorwärtsrichtung verbunden und eingerichtet ist, den Einfluss der Bodenneigung in Vorwärtsrichtung auf die Position der Saatgutkörner (36) vorausschauend zu berücksichtigen.

6. Anordnung nach einem der Ansprüche 1 bis 5, wobei die Steuerung (60) eingerichtet ist, den zeitlichen Versatz (Δt) zwischen der Aktivierung des Antriebs (34) und dem Erreichen der endgültigen Position des Saatkorns (36) in der Furche (38) anhand der durch den Saatgutsensor (58) erkannten Position des Saatkorns (36) in der Furche (38) und/oder anhand der Zeitpunkte der Aktivierung des Antriebs (34) und des Nachweises des Saatkorns (36) in der Furche (38) zu bestimmen.

7. Anordnung nach einem der Ansprüche 1 bis 6, wobei die Steuerung (60) eingerichtet ist, die Ablagepositionen der Saatkörner (36) in der Furche (38) abzuspeichern und darauf basierend bei einer Anschlussfahrt den Antrieb (34) anzusteuern.

8. Anordnung nach einem der Ansprüche 1 bis 7, wobei die Steuerung (60) eingerichtet ist, einen Versatz (Δx) zwischen einer Soll- und Istposition des Saatkorns (36) bei einer ersten Überfahrt des Feldes und/oder einer Anschlussfahrt zu ermitteln und diesen Versatz bei der Anschlussfahrt durch entsprechende Ansteuerung des Antriebs (34) zu minimieren.

9. Verfahren zur Präzisionsaussaat von Saatkörnern, wobei:

einer Sämaschine (12) mit wenigstens einer Reiheneinheit (14) ein zur Veranlassung einer Abgabe eines Saatkorns (36) in eine Furche (38) eingerichteter Antrieb (34) zugeordnet ist, und eine Steuerung (60), die mit einem Positionsbestimmungssystem (64), einer Speichereinrichtung (62) zur zwei- oder dreidimensionalen Abspeicherung gewünschter Ablagepositionen von Saatgutkörnern (36), dem Antrieb (34) der Reiheneinheit (14) und einem Saatgutsensor (58) zur Erfassung der tatsächlichen Ablageposition der Saatgutkörner (36) in der Furche (38) verbunden ist und den Antrieb (34) basierend auf Signalen des Positionsbestimmungssystems (64), den in der Speichereinrichtung (62) eingetragenen, gewünschten Ablagepositionen und Signalen des Saatgutsensors (58) derart ansteuert, dass die Saatgutkörner (36) sukzessive an den gewünschten Ablagepositionen abgelegt werden, wobei die Steuerung (60) anhand der Signale des Saatgutsensors (58) einen zeitlichen Versatz (Δt) zwischen der Aktivierung des Antriebs (34) und dem Erreichen der endgültigen Position des Saatkorns (36) in der Furche (38) evaluiert und gemeinsam mit der aktuellen Vortriebsgeschwindigkeit (v) bei der Ansteuerung des Antriebs (34) berücksichtigt.

10. Verfahren nach Anspruch 9, wobei nach dem Aussäen der Saatkörner (36) in der Speichereinheit (62) der Steuerung (60) eine Karte vorliegt, an welchen Stellen die Saatkörner (36) auf dem Feld abgelegt wurden und diese Karte zur Erstellung eines Wegplans für zukünftige Feldbearbeitungen verwendet wird, wobei der Wegplan sich aus in Särichtung oder in einer einen Winkel mit der Särichtung einschließenden Richtung verlaufenden Überfahrten des Feldes zusammensetzt.

**Claims**

1. Assembly for the precision drilling of seed grains, comprising:

a drilling machine (12) with at least one row unit (14) which is assigned a drive (34) set up for instigating delivery of a seed grain (36) into a furrow (38), and a control system (60), which is connected to a position-determining system (64), to a memory device (62) for the two- or three-dimensional storage of desired delivery positions of seed grains (36), to the drive (34) of the row unit (14) and to a seed material sensor (58) for detecting the actual delivery position of the seed grains (36) in the furrow (38) and which is set up to control the drive (34) based on signals from the position-determining system (64), the desired delivery positions registered in the memory device (62) and signals from the seed material sensor (58) so that the seed grains (36) are deposited successively at the desired delivery positions, wherein the control system (60) is set up to evaluate on the basis of the signals from the seed material sensor (58) a time stagger (Δt) between the activation of the drive (34) and the moment the seed grain (36) reaches its final position in the furrow (38) and to take this into consideration together with the current forward drive speed (v) when controlling the drive (34).

**2.** Assembly according to Claim 1, wherein the drilling machine (12) comprises a plurality of row units (14) arranged side by side next to one another in a row or are offset relative to one another in the forward direction, wherein each row unit is assigned one drive (34) controllable separately by the control system (60) or all row units are assigned one common drive controllable by the control system (60).

**3.** Assembly according to Claim 2, wherein each of the row units (14) is assigned a seed material sensor (58) or only some of the row units (14) or only one single row unit (14) is equipped with a seed material sensor (58).

**4.** Assembly according to one of Claims 1 to 3, wherein the seed material sensor (58) comprises a camera and/or a laser scanner and/or a one-dimensional line sensor for detecting the seed grain and/or a light beam and/or a thermosensor for detecting heated-up seed material.

**5.** Assembly according to one of the preceding claims, wherein the control system (60) is connected to means for detecting the slope of the ground in the forward direction and is set up to anticipate and take into account the influence of the sloping ground in the forward direction on the position of the seed grains (36).

**6.** Assembly according to one of Claims 1 to 5, wherein the control system (60) is set up to determine the time stagger (∆t) between the activation of the drive (34) and the moment the seed grain (36) reaches its final position in the furrow (38) from the position of the seed grain (36) in the furrow (38) detected by the seed material sensor (58) and/or from the time points of the activation of the drive (34) and the confirmation of the seed grain (36) in the furrow (38) .

**7.** Assembly according to one of Claims 1 to 6, wherein the control system (60) is set up to store the delivery positions of the seed grains (36) in the furrow (38) and to control the drive (34) during a following crossing based thereon.

**8.** Assembly according to one of Claims 1 to 7, wherein the control system (60) is set up to determine a stagger (∆x) between an ideal and actual position of the seed grain (36) during a first crossing of the field and/or a following crossing and to minimize this stagger during the following crossing through suitable control of the drive (34).

**9.** Method for the precision drilling of seed grains, wherein:

a drilling machine (12) with at least one row unit (14) is assigned a drive (34) set up for instigating delivery of a seed grain (36) into a furrow (38), and
a control system (60) which is connected to a position-determining system (64), to a memory device (62) for two- or three-dimensional storage of desired delivery positions of seed grains (36), to the drive (34) of the row unit (14) and to a seed material sensor (58) for detecting the actual delivery position of the seed grains (36) in the furrow (38) and controls the drive (34) based on signals from the position-determining system (64), the desired delivery positions registered in the memory device (62) and signals from the seed material sensor (58) so that the seed grains (36) are deposited successively at the desired delivery positions,
wherein the control system (60) evaluates on the basis of the signals from the seed material sensor (58) a time stagger (∆t) between the activation of the drive (34) and the moment the seed grain (36) reaches its final position in the furrow (38) and takes this into consideration together with the current forward drive speed (V) when controlling the drive (34).

**10.** Method according to Claim 9, wherein, after drilling the seed grains (36), a chart is provided in the memory unit (62) of the control system (60) to show the positions at which the seed grains (36) were deposited on the field and this chart is used to set up a route plan for future field works, wherein the route plan is composed from crossings of the field running in the drilling direction or in a direction including an angle with the drilling direction.

**Revendications**

**1.** Agencement pour l'ensemencement précis de graines, comprenant :

un semoir (12) avec au moins une unité de rang (14), auquel est associé un entraînement (34) prévu pour déclencher le dépôt d'une graine (36) dans un sillon (38), et
une commande (60) qui est connectée à un système de détermination de position (64), à un dispositif de mémoire (62) pour mémoriser de manière bi- ou tridimensionnelle des positions de dépôt souhaitées de graines de semences (36), à l'entraînement (34) de l'unité de rang (14) et à un capteur de semences (58) pour détecter la position de dépôt effective des graines de semences (36) dans le sillon (38), et qui est prévue pour commander l'entraînement (34) sur la base de signaux du système de détermination de position (64), des positions de dépôt souhaitées saisies dans le dispositif de mémoire (62) et de signaux du capteur de semences (58), de telle sorte que les graines de semences (36) soit déposées successivement dans les positions de dépôt souhaitées,

la commande (60) étant prévue pour évaluer, à l'aide des signaux du capteur de semences (58), un décalage dans le temps ($\Delta t$) entre l'activation de l'entraînement (34) et l'obtention de la position finale de la graine (36) dans le sillon (38), et pour en tenir compte conjointement avec la vitesse d'avance effective (v) lors de la commande de l'entraînement (34).

2. Agencement selon la revendication 1, dans lequel le semoir (12) comprend une pluralité d'unités de rangs (14) disposées latéralement les unes à côté des autres dans une rangée ou de manière décalée les unes par rapport aux autres dans la direction d'avance, auxquelles est à chaque fois associé un entraînement (34) pouvant être commandé séparément par la commande (60) ou auxquelles est associé un entraînement commun pouvant être commandé par la commande (60).

3. Agencement selon la revendication 2, dans lequel à chacune des unités de rangs (14) est associé un capteur de semences (58) ou seulement une partie des unités de rangs (14) ou seulement une unité de rang unique (14) est munie d'un capteur de semences (58).

4. Agencement selon l'une quelconque des revendications 1 à 3, dans lequel le capteur de semences (58) comprend une caméra et/ou un scanner laser et/ou un capteur linéaire unidimensionnel pour détecter la graine et/ou une barrière lumineuse et/ou un capteur thermique pour détecter la graine chauffée.

5. Agencement selon l'une quelconque des revendications précédentes, dans lequel la commande (60) est connectée à des moyens pour détecter l'inclinaison du sol dans la direction d'avance et est prévue pour tenir compte à l'avance de l'influence de l'inclinaison du sol dans la direction d'avance sur la position des graines de semences (36).

6. Agencement selon l'une quelconque des revendications 1 à 5, dans lequel la commande (60) est prévue pour déterminer le décalage dans le temps ($\Delta t$) entre l'activation de l'entraînement (34) et l'obtention de la position finale de la graine (36) dans le sillon (38) à l'aide de la position de la graine (36) dans le sillon (38) détectée par le capteur de semences (58) et/ou à l'aide des instants d'activation de l'entraînement (34) et de la mise en évidence de la graine (36) dans le sillon (38).

7. Agencement selon l'une quelconque des revendications 1 à 6, dans lequel la commande (60) est prévue pour mémoriser les positions de dépôt des graines (36) dans le sillon (38) et en se basant sur celles-ci, pour commander l'entraînement (34) lors d'une conduite subséquente.

8. Agencement selon l'une quelconque des revendications 1 à 7, dans lequel la commande (60) est prévue pour déterminer un décalage ($\Delta x$) entre une position de consigne et une position effective de la graine (36) lors d'un premier passage dans le champ et/ou lors d'une conduite subséquente et pour minimiser ce décalage lors de la conduite subséquente par une commande correspondante de l'entraînement (34).

9. Procédé d'ensemencement précis de graines, dans lequel :

un entraînement (34) prévu pour déclencher le dépôt d'une graine (36) dans un sillon (38) est associé à un semoir (12) avec au moins une unité de rang (14), et

une commande (60), qui est connectée à un système de détermination de position (64), à un dispositif de mémoire (62) pour mémoriser de manière bi- ou tridimensionnelle des positions de dépôt souhaitées de graines de semences (36), à l'entraînement (34) de l'unité de rang (14) et à un capteur de semences (58) pour détecter la position de dépôt effective des graines de semences (36) dans le sillon (38), et qui commande l'entraînement (34) sur la base de signaux du système de détermination de position (64), des positions de dépôt souhaitées saisies dans le dispositif de mémoire (62) et de signaux du capteur de semences (58), de telle sorte que les graines de semences (36) soient déposées successivement dans les positions de dépôt souhaitées,

la commande (60) évaluant, à l'aide des signaux du capteur de semences (58), un décalage dans le temps ($\Delta t$) entre l'activation de l'entraînement (34) et l'obtention de la position finale de la graine (36) dans le sillon (38), et en tenant compte conjointement avec la vitesse d'avance effective (v) lors de la commande de l'entraînement (34).

10. Procédé selon la revendication 9, dans lequel, après l'ensemencement des graines (36), une carte est créée dans l'unité de mémoire (62) de la commande (60), indiquant à quels endroits les graines (36) ont été déposées dans le champ et cette carte est utilisée pour créer un plan de route pour des travaux ultérieurs dans le champ, le plan de route se composant de traversées dans le champ s'étendant dans la direction d'ensemencement ou dans une direction formant un angle avec la direction d'ensemencement.

Fig. 1

Fig. 2

EP 2 636 292 B1

Start

100

Zeitpunkt der Aktivierung von 34 festlegen, basierend auf 64,62, V und $\Delta t$; 34 aktivieren

102

Saatkorn 36 in Furche 38 mit 58 erfassen

104

Position des Saatkorns 36 bestimmen, Vergleich mit Sollposition und $\Delta t$ neu bestimmen

106

Neigung erfassen; $\Delta t$ anpassen

108

102

Fig. 4

Fig. 3

62
64
66
60
34
58

Fig. 5

36

Start — 200

34 basierend auf 62,64 an Sollposition aktivieren;
Istposition mit 58 und 64 erfassen
und in 66 speichern — 202

erste Überfahrt beendet? — 204 → nein → 202

ja

34 basierend auf 62,64 und 58 aktivieren — 206

Ende? — nein → 206 — 208

ja

Stop — 210

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1415523 A1
- DE 102005010686 A1
- EP 2227932 A1
- US 6941225 B
- US 6386128 B1
- EP 2420122 A1
- EP 2322026 A1